# EUROPEAN PATENT SPECIFICATION

(11) **EP 2 847 881 B1**
(45) Date of publication and mention of the grant of the patent: **21.03.2018**
(21) Application number: 13787590.2
(22) Date of filing: 09.05.2013
(51) Int. Cl.: H04B 7/02, H04B 7/06, H04B 7/08, H04W 74/08, H04W 16/28

(54) **SCHEME FOR PERFORMING BEAMFORMING IN COMMUNICATION SYSTEM**
SCHEMA ZUR DURCHFÜHRUNG FÜR STRAHLFORMUNG IN EINEM KOMMUNIKATIONSSYSTEM
PROCÉDÉ POUR EFFECTUER UNE FORMATION DE FAISCEAU DANS UN SYSTÈME DE COMMUNICATION

(30) Priority: 10.05.2012 KR 20120049522
(43) Date of publication of application: 18.03.2015
(73) Proprietor: Samsung Electronics Co., Ltd., Suwon-si, Gyeonggi-do 443-742 (KR)
(72) Inventor: JEONG, Su-Ryong, Gyeonggi-do 443-742 (KR); SON, Yeong-Moon, Gyeonggi-do 443-742 (KR); YU, Hyun-Kyu, Gyeonggi-do 443-742 (KR); KIM, Tae-Young, Gyeonggi-do 443-742 (KR)
(74) Representative: Nederlandsch Octrooibureau
(86) International application number: PCT/KR2013/004088
(87) International publication number: WO 2013/169035

(56) References cited:
- WO-A1-2009/075622
- JP-A- H11 252 614
- US-A1- 2005 153 657
- US-A1- 2007 243 831
- US-A1- 2009 016 460
- US-A1- 2009 143 073
- US-A1- 2011 007 721
- JUNYI WANG ET AL: "Beam codebook based beamforming protocol for multi-Gbps millimeter-wave WPAN systems", IEEE JOURNAL ON SELECTED AREAS IN COMMUNICATIONS, IEEE SERVICE CENTER, PISCATAWAY, US, vol. 27, no. 8, 1 October 2009 (2009-10-01), pages 1390-1399, XP011277425, ISSN: 0733-8716, DOI: 10.1109/JSAC.2009.091009

## Description

### Technical Field

The present invention relates to a method and apparatus for increasing a data rate in a communication system. More particularly, the present invention relates to a method and apparatus for efficiently performing beamforming.

### Background Art

Communication systems have been developed to support higher data rates to meet the need for steadily increasing wireless data traffic. For example, fourth generation wireless communication systems have sought to develop technologies toward improving spectral efficiency to increase data rates. Since such technologies are not enough to meet the need for the ever increasing amount of wireless data traffic, a very wide frequency band is also required. However, it is difficult to secure a wide frequency band below 10 GHz, so the wide frequency band should be secured from higher than 10 GHz. However, the higher the transmission frequency for wireless communication,
the shorter the propagation range, thus causing reduction of service coverage.

Accordingly, there is a need for an improved apparatus and method for increasing a data rate in a communication system.

The above information is presented as background information only to assist with an understanding of the present disclosure. No determination has been made, and no assertion is made, as to whether any of the above might be applicable as prior art with regard to the present invention.

US 2011007721 A1 discloses a method operable in a wireless communication system are provided in which an access probe is generated for transmission to a wireless node. A first signal is generated for transmission to the wireless node. The first signal includes information corresponding to a first preferred beam pattern from the wireless node to the apparatus. A second signal is received from the wireless node including information corresponding to a second preferred beam pattern from the apparatus to the wireless node. The second preferred beam pattern is determined based on the access probe. The apparatus communicates with the wireless node using at least one of the first preferred beam pattern or the second preferred beam pattern.

WO 2009/075622 A1 discloses a method for use in a wireless cellular communications system, in which there is a Radio Base Station, RBS, which serves to control traffic to and from users equipments, UEs, within a cell in the system. Transmissions from the RBS to the UEs comprise transmissions on one or more broadcast channels, and a UE can assume one of at least two states, one such state being an "idle" state. A UE which is in the idle state can transmit synchronization messages to its RBS in a random access channel, and the RBS uses such synchronization messages as "beacons" for beam forming transmissions of broadcast channels to the UE, and for directing such formed beams towards the UE.

JUNYI WANG ET AL: "Beam codebook based beamforming protocol for multi-Gbps millimeter-wave WPAN systems", IEEE JOURNAL ON SELECTED AREAS IN COMMUNICATIONS, IEEE SERVICE CENTER, PISCATAWAY, US, vol. 27, no. 8, 1 October 2009 (2009-10-01), pages 1390-1399, discloses high speed, long range, reliable transmission in millimeter-wave 60GHz wireless personal area networks (60GHz WPANs), wherein a beamforming (BF) protocol is realized in media access control (MAC) layer on top of multiple physical layer (PHY) designs. The proposed BF protocol targets to minimize the BF set-up time and to mitigate the high path loss of 60GHz WPAN systems. It consists of 3stages, namely the device (DEV) to DEV linking, sector-level searching and beam-level searching. The division of the stages facilitates significant reduction in setup time as compared to BE protocols with exhaustive searching mechanisms.

### Disclosure of Invention

### Technical Problem

Aspects of the present invention are to address at least the above-mentioned problems and/or disadvantages and to provide at least the advantages described below. Accordingly, an aspect of the present invention is to provide a method and apparatus for increasing data rate in a communication system.

Another aspect of the present invention is to provide a method and apparatus for efficiently
performing beamforming to increase a data rate in a communication system.

Another aspect of the present invention is to provide a method and apparatus for having quick uplink access using beamforming in a communication system.

### Solution to Problem

In accordance with an aspect of the present invention, a method of performing beamforming in a base station is defined in claim 1.

In accordance with another aspect of the present invention, a method of performing beamforming in a terminal is defined in claim 4.

In accordance with another aspect of the present invention, a base station for performing beamforming is defined in claim 7.

In accordance with another aspect of the present invention, a terminal for performing beamforming is defined in claim 10.

### Advantageous Effects of Invention

Other aspects, advantages, and salient features of the invention will become apparent to those skilled in the art from the following detailed description, which, taken in conjunction with the annexed drawings, discloses exemplary embodiments of the invention.

### Brief Description of Drawings

The above and other aspects, features, and advantages of certain exemplary embodiments of the present invention will be more apparent from the following description taken in conjunction with the accompanying drawings, in which:
FIG. 1 is a schematic diagram to explain beam alignment performed in a communication system according to an exemplary embodiment of the present invention;
FIG. 2 is a schematic diagram to explain beam alignment performed in a communication
   system according to an exemplary embodiment of the present invention;
FIG. 3 is a schematic diagram to explain beam alignment performed in a communication
   system according to an exemplary embodiment of the present invention;
FIGS. 4A and 4B are diagrams in terms of a receive beam configuration message according to an exemplary embodiment of the present invention;
FIG. 5 is a flowchart of operations of a base station according to an exemplary embodiment
   of the present invention;
FIG. 6 is a flowchart of operations of a terminal according to an exemplary embodiment
   of the present invention;
FIG. 7 is a block diagram of a base station according to an exemplary embodiment of the present invention; and
FIG. 8 is a block diagram of a terminal according to an exemplary embodiment of the present invention.

### Mode for the Invention

Throughout the drawings, like reference numerals will be understood to refer to like parts, components, and structures.

The following description with reference to the accompanying drawings is provided to assist in a comprehensive understanding of exemplary embodiments of the invention as defined by the claims and their equivalents. It includes various specific details to assist in that understanding but these are to be regarded as merely exemplary.

Accordingly,
those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an" and "the" include plural referents unless the context clearly dictates otherwise. Thus, for example, reference to "a component surface" includes reference to one or more of such surfaces. Beamforming is a technology to increase a radio propagation range, including transmit (Tx) beamforming and receive (Rx) beamforming. Transmit beamforming focuses the radio propagation range toward a particular direction using a set of multiple antennas called an antenna array whose element, i.e., each antenna, is called an array element. Using the transmit beamforming not only increases the radio propagation range but also reduces interference with neighboring cells since signal intensity in other directions than the focused direction is weak.

The receive beamforming uses the antenna array on a receiver's side, focusing a radio receivable area toward a particular direction, thereby increasing the radio reception range, and reducing the reception gain of a transmitted signal in other directions than the focused direction, thereby reducing interference with neighboring cells.

For performing beamforming, beam alignment operations should be performed to align beams between a transmitter and a receiver, which may be proceeded with a random access procedure. To perform such beam alignment operations, the transmitter or the receiver performs a procedure of transmitting or receiving beams while shifting beam directions, to find the best beam.

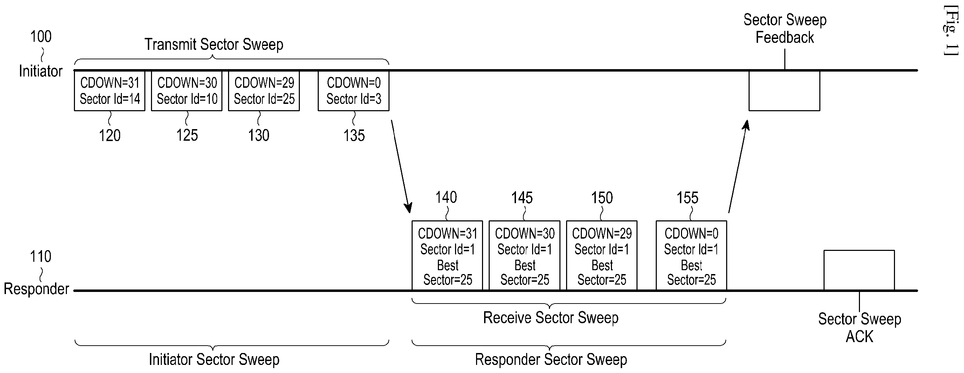

FIG. 1 is a schematic diagram to explain beam alignment performed in a communication system according to an exemplary embodiment of the present invention.

Referring to FIG. 1, an initiator 100, which may be a transmitter, sequentially transmits beams 120, 125, 130, and 135 toward different beam directions distinguished by respective sector IDentities (IDs), and the responder 110, which may be a receiver, sequentially receives the beams 120, 125, 130, and 135 and sends information about a best transmit (Tx) beam (e.g., the beam 130 whose sector ID is 25) back to the initiator 100 by carrying the information in signals 140, 145, 150, and 155 to be transmitted to the initiator 100.

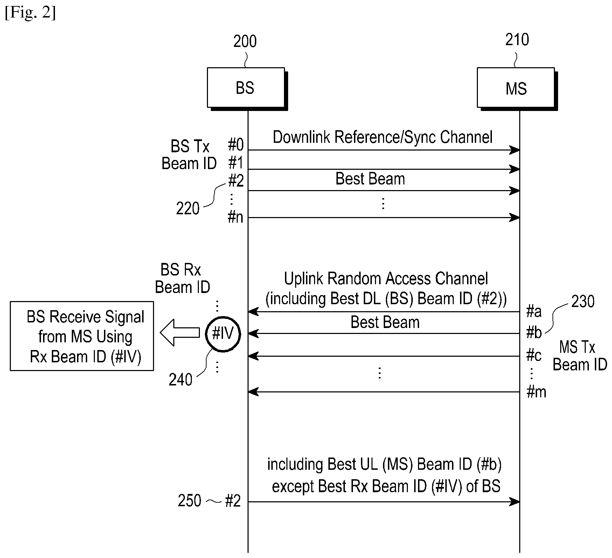

FIG. 2 is a schematic diagram to explain beam alignment performed in a communication system according to an exemplary embodiment of the present invention. An exemplary beam alignment process shown herein may be performed during an initial entry procedure or a random access procedure.

Referring to FIG. 2, a Base Station (BS) 200 transmits a sync signal to respective beam directions on a downlink channel, where #0 to #n identifies beams for different directions. A terminal (also called a Mobile Station (MS)) 210, to make an entry to the service coverage area of the BS 200, measures received signal intensity of the respective beams #0 to #n transmitted by the BS 200, and determines a downlink sync signal that has the best signal intensity and the corresponding transmit beam ID (e.g., #2, 220). The MS 210 stores information about the best transmit beam ID 220 of the BS 200 for later transmission together with a signal to the BS 200 on an uplink random access channel or an initial ranging channel.

If the MS 210 has one or more transmit beam directions #a to #m, the MS 210 sequentially transmits an uplink random access signal or an initial ranging signal to each of the directions #a to #m. The BS 200 tries to receive the uplink random access signal or the initial ranging signal, and if the reception is successful, determines a transmit beam ID having the best receive signal intensity, e.g., #b, 230 among received signals. The BS 200 identifies the transmit beam ID 220 of the BS 200, transmitted by the MS 210, and transmits 250 information about the best uplink transmit beam ID 230 of the MS 210 determined by the BS 200 to the MS 210 in the direction of the transmit beam ID 220 of the BS 200.

As such, a receiver may guide a transmitter to transmit signals in the best beam direction by finding the best beam that has the best signal intensity and informing the transmitter of the ID of the best beam.

In the foregoing beam alignment process, aligning receive beamforming directions was not described because, in case of receive beamforming, the receiver may determine by itself the best receive (Rx) beam direction 240 that has the best signal intensity by several repetitive receptions and may apply the determined receive beam. For instance, since the BS 200 knows what point in time and which channel the MS 210 uses for transmission while the BS 200 assigns resources to the MS 200, the BS 200 may operate to receive a signal transmitted at the same point in time on the same channel in the receive beamforming direction.

However, the case that the receiver is capable of receiving the signal with its own receive beam is only true if the receiver exactly knows when the transmitter transmits. Thus, if the receiver does not know when the transmitter transmits, smooth signal transmission and reception may not be guaranteed because the receiver is not capable of forming a proper beam for the transmitter.

For example, in a case that the MS 210 operates as the transmitter and the BS 200 operates as the receiver, if the MS 210 sends a resource assignment request in a BandWidth (BW)-request message for uplink transmission at a particular point in time, it is difficult for the BS 200 to determine an operation time of the receive beam for the MS 210 because the BS 200 may not know when the MS 210 is going to transmit the resource assignment request. Furthermore, the MS 210 may request the BS 200 to transmit a control/reference signal, such as a reference signal, a sounding signal, etc. due to a change of the channel condition, but the BS 200 is unaware of when it was requested by the MS 200. In addition, it may happen that the MS 210 determines to perform handover and sends a handover request to the BS 200.

In the example, the MS 210 randomly transmits the uplink signal to the BS 200, which may happen when a channel for random access, such as initial random access, i.e., a Random Access CHannel (RACH) is used. Since the BS 200 may not know when the MS 210 is going to transmit a signal, the BS 200 repeatedly attempts reception with all receive beams in some order and cycles, and if a signal has been received in sync with the receive beam direction, decodes the signal. The MS 210 may not know when the BS 200 operates a receive beam aligned with the MS 210 even if the MS 210 knows the transmit beam direction for the BS 200, so the MS 210 repeatedly transmits transmit beams in a particular direction until reception is successful at the BS 200.

In this case, unnecessary power consumption occurs between the BS 200 and the MS 210 and the possibility of a successful reception may be decreased due to increased interference with the BS 200.

In an exemplary embodiment of the present invention, smooth signal communication is effectively guaranteed by notifying the MS 210 of information about the reception beam of the BS 200.

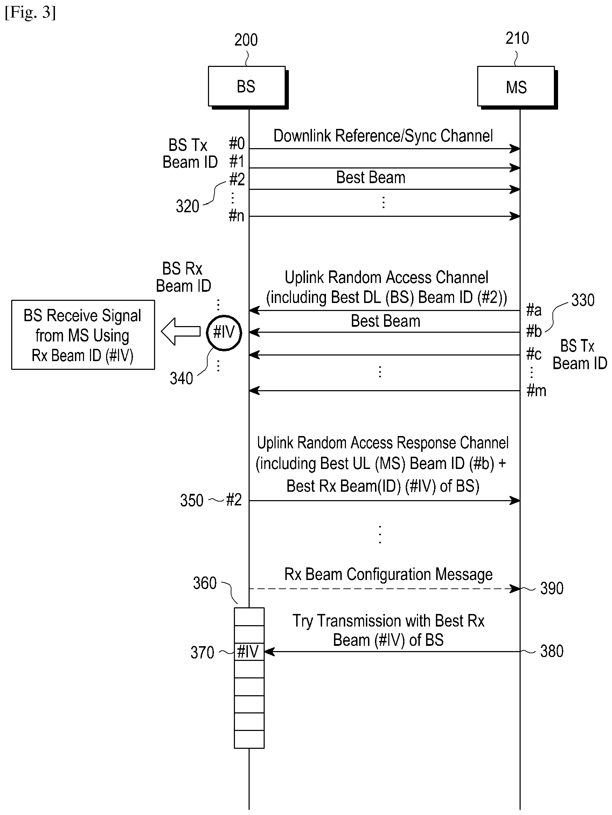

FIG. 3 is a schematic diagram to explain beam alignment performed in a communication system according to an exemplary embodiment of the present invention. An exemplary beam alignment process described below may be performed in e.g., an initial entry procedure or a random access procedure.

Referring to FIG. 3, the BS 200 transmits a sync signal to respective beam directions on a downlink channel, where #0 to #n identifies beams for different directions. The MS 210, to make an entry to the service coverage area of the BS 200, measures received signal intensity of the respective beams #0 to #n, and determines a best downlink sync signal that has the best signal intensity and the corresponding transmit beam ID (e.g., #2, 320). At this time, the MS 210 may determine one or more best transmit beams of the BS 200. In other words, the MS 210 may determine an upper x % of transmit beams that have good receive signal intensities to be the best transmit beams. Here, x is a certain threshold value which may be e.g., 20. The MS 210 then stores information about the best transmit beam ID 320 of the BS 200 for later transmission with a signal to the BS 200 on an uplink random access channel or an initial ranging channel.

If the MS 210 has one or more transmit beam directions #a to #m, the MS 210 sequentially transmits an uplink random access channel signal or an initial ranging signal to each of the directions #a to #m. The BS 200 attempts to receive the uplink random access channel signal or an initial ranging signal, and if the reception is successful, determines a transmit beam ID having the best receive signal intensity, e.g., #b, 330 among received signals. At this time, the BS 200 may determine one or more best transmit beams of the MS 210. In other words, the BS 200 may determine an upper x % of transmit beams that have good receive signal intensities to be the best transmit beams. Here, x is a certain threshold value which may be e.g., 20. The random access channel signal may include e.g., a random access preamble message of the Long Term Evolution (LTE) system, a Range Request (RNG_REQ) message, etc.

The BS 200 identifies the best transmit beam ID 320 of the BS 200 transmitted from the MS 210, and transmits 350 information about the best uplink transmit beam ID 330 of the MS 210 determined by the BS 200 to the MS 210 in the direction of the best transmit beam ID 320 of the BS 200 on an uplink random access response channel. The BS 200 determines the best receive beam ID (e.g., #IV, 340) by performing a process of aligning receive beamforming directions and transmits information about the best receive beam 340 to the MS 210. That is, the BS 200 transmits the best uplink transmit beam ID 330 of the MS 210 and the best receive beam ID 340 of the BS 200 to the MS 200. At this time, the BS 200 may determine one or more best receive beams of the BS 200. In other words, the BS 200 may determine an upper x % of receive beams that have good receive signal intensities to be the best receive beams. Here, x is a certain threshold value which may be e.g., 20.

The BS 200 transmits 390 a receive beam configuration message 360 that represents a configuration format of the receive beam of the BS 200 for uplink channels on which terminals are capable of randomly transmitting signals, such as the BW-request channel, a reference channel-request channel, a handover-request channel, etc., to all MSs in the cell. The receive beam configuration message 360 may be broadcasted because the receive beam configuration message 360 is not terminal specific (or UE-specific) information. For example, the receive beam configuration message 360 may be transmitted in the form of a periodic broadcast message. Although illustrated in FIG. 3 as transmitted after transmission of the uplink random access response channel, the receive beam configuration message 360 may be periodically transmitted from the BS 200 to terminals at any time. For example, the receive beam configuration message 360 may be transmitted before transmission of the downlink reference channel or the sync channel. In an exemplary embodiment, the configuration format of the receive beam represents a BS receive beam sequence of the uplink channels that terminals may arbitrarily access. In another exemplary embodiment, the configuration format of the receive beam represents mapping relations between sub-channels that make up a channel on which terminals may randomly transmit signals and corresponding receive beams.

Upon reception 390 of the receive beam configuration message 360, the MS 210 transmits 380 a signal to the BS 200 using a receive beam ID of the BS 200 or associated information. In an exemplary embodiment, the MS 210 transmits the signal on a sub-channel that corresponds to receive beam ID #IV 370.

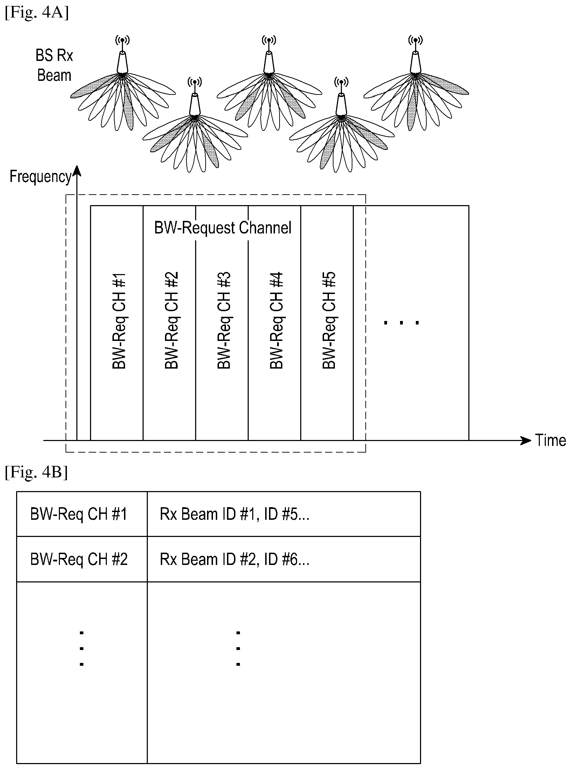

FIGS. 4A and 4B are diagrams in terms of a receive beam configuration message according to an exemplary embodiment of the present invention.

In exemplary embodiments of the present invention, the receive beam configuration message may be configured in different ways. As an example, the receive beam configuration message may be configured to directly specify receive beam indexes that correspond to respective sub-channels that form a particular channel or to include an index to indicate a set order or form of the receive beam indexes that correspond to the respective sub-channels. The order or form of the receive beam indexes that correspond to the respective sub-channels may be predetermined and shared by the BS 200 and the MS 210.

Referring to FIG. 4A, a method of configuring a BW-request channel is illustrated using a frequency-time plane. The BW-request channel may include a number of sub-channels (e.g., BW-Req CH #1 to #5), each of which is assigned at least one receive beam.

FIG. 4B illustrates a receive beam configuration message that may include information regarding receive beam indexes assigned to the respective sub-channels. For example, CHannel 1 (CH #1) is assigned receive beam IDs 1, 5, etc., and CHannel 2 (CH #2) is assigned receive beam IDs 2, 6, etc.

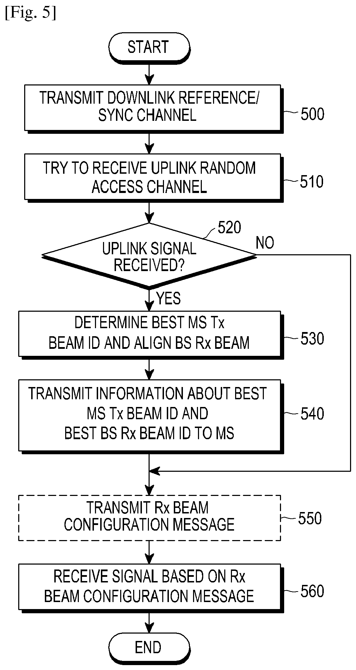

FIG. 5 is a flowchart of operations of a BS according to an exemplary embodiment of the present invention.

Referring to FIG. 5, the BS 200 transmits a downlink reference signal or a sync channel to the MS 210 in step 500, and attempts reception for an uplink random access channel in step 510. If an uplink random access signal is received from the MS 210 in 520, the BS 200 determines a transmit beam ID of the MS 210 by determining a best signal among signals transmitted by the MS 210 and decoding it while doing receive beam alignment, in step 530. Otherwise, if the uplink random access signal is not received from the MS 210 in 520, the BS 200 proceeds to step 550 to perform operations related to a receive beam configuration message. The receive beam configuration message to be transmitted if the uplink random access channel signal has not received from the MS 210 may be information to be transmitted by the BS 200 for existing access terminals.

After determining the transmit beam ID of the MS 210, the BS 200 transmits information about the transmit beam which includes the best transmit beam ID of the MS 210 and information about the receive beam which includes the receive beam ID of the BS 200 used to receive the transmit beam of the MS 210 to the MS 210 that transmitted the random access signal, on a random access response channel, in step 540.

Furthermore, the BS 200 transmits a receive beam configuration message for channels randomly accessible by terminals, such as the BW-request channel, the reference channel-request channel, the handover-request channel, etc. to the terminals in step 550, and in return, receives signals transmitted on at least one of the BW-request channel, the reference channel-request channel, the handover-request channel, etc., based on the receive beam configuration message in step 560. At this time, the BS 200 sequentially tries to receive a signal from the MS 210 using a receive beam that corresponds to each of the plurality of sub-channels that form the channel. The receive beam configuration message used by the BS 200 to receive a signal may not necessarily be transmitted at the same time as described in connection with FIG. 5 but transmitted at any time. In other words, the BS 200 may not transmit the receive beam configuration message only after transmission of the information about the best terminal transmit beam ID and the information about the best BS receive beam ID, as indicated by 540, but may periodically broadcast the receive beam configuration message. In the exemplary embodiment illustrated in FIG. 5, transmission of the receive beam configuration message is followed by the step 540.

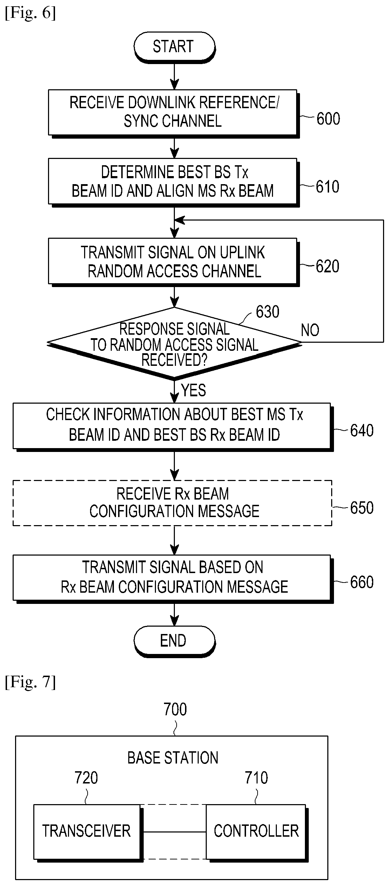

FIG. 6 is a flowchart of operations of an MS 210 according to an exemplary embodiment of the present invention.

Referring to FIG. 6, the MS 210 obtains sync and BS information by receiving a downlink reference or sync channel, in step 600, and determines a best downlink transmit beam ID of the BS 200 while aligning receive beams of the MS 210, in step 610. While attempting an entry to service coverage area of the BS 200, the MS 210 transmits information about the best transmit beam ID of the BS 200 with an uplink random access signal, in step 620. If a response signal to the random access signal has been received from the BS 200 in step 630, the MS 210 checks information about a best transmit beam ID of the MS 210 and information about a best receive beam ID of the BS 200 in step 640. Otherwise, if the response signal has not been received from the BS 200 in step 630, the MS 210 recognizes the failure of the random access and goes back to the step 620 to again attempt entry to the service coverage area of the BS 200.

After checking the information about the best receive beam ID of the BS 200, the MS 210 receives a receive beam configuration message that includes receive beam configuration of the BS 200 for channels accessible by the MS 210 at any time, such as the BW-request channel, the reference channel-request channel, the handover-request channel, etc. in step 650, and transmits a signal on a sub-channel that corresponds to the best receive beam ID of the BS 200 based on the receive beam configuration message in step 660. The receive beam configuration message based on which the MS 210 transmits a signal on the sub-channel in step 660 may not necessarily be received as illustrated in FIG. 6 but received at any time. In other words, the MS 210 may not receive the receive beam configuration message only after reception of the information about the best terminal transmit beam ID and the information about the best BS receive beam ID, as indicated by 640, but may periodically receive the broadcast receive beam configuration message. In the exemplary embodiment illustrated in FIG. 6, reception of the receive beam configuration message is followed by the step 640.

Meanwhile, the BS 200 and the MS 210 each include a transmitter for transmitting the signal, a receiver for receiving the signal, a controller for controlling operations of the transmitter and the receiver, etc., each of which operates as described above.

FIG. 7 is a block diagram of a BS according to an exemplary embodiment of the present invention.

Referring to FIG. 7, a BS 700 may include a transceiver 720 for transmitting a receive beam configuration message, a downlink reference channel signal, a sync channel signal, an uplink random access response channel signal, etc. to a terminal and for receiving e.g., an uplink random access channel signal from the terminal, and a controller 710 for controlling the operation of the transceiver 720. It should be understood that the controller 710 controls general operations of the BS 700. The transceiver 720 and the controller 710 may be implemented separately as a Radio Frequency (RF) module and a processor, respectively, or may be incorporated in a single module.

More specifically, the transceiver 720 may include an antenna unit (not shown) that has a plurality of array elements for transmitting and receiving RF signals, a beamforming unit (not shown) that performs beamforming on the signals, a modem (not shown) that performs signal reconstruction, modulation/demodulation, coding/ decoding, etc., and one or more RF chains (not shown) that perform conversion on a received RF signal and a baseband digital signal for signal delivery between the beamforming unit and the modem unit.

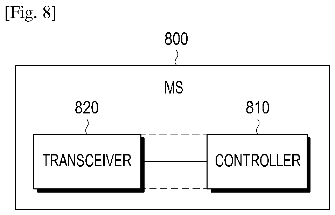

FIG. 8 is a block diagram of a terminal according to an exemplary embodiment of the present invention.

Referring to FIG. 8, a terminal 800 may include a transceiver 820 that transmits e.g., an uplink random access channel signal to a BS and receives a receive beam configuration message, a downlink reference channel signal, a sync channel signal, an uplink random access response channel signal, etc., and a controller 810 that controls operations of the transceiver 820. It should be understood that the controller 810 controls general operations of the terminal 800. The transceiver 820 and the controller 810 may be implemented separately as an RF module and a processor, respectively, or may be incorporated in a single module. Details of the transceiver 820 of the terminal 800 may be similar to those of the transceiver 720 of the BS 700, or may only include part of components of the transceiver 720 due to hardware constraints.

The foregoing operations may be implemented by program codes stored in a storage equipped in the BS 700 or the terminal 800. In other words, the controller 710 or 810 may perform the foregoing operations by reading out and executing the program codes with a processor or the Central Processing Unit (CPU).

Various components and modules of the BS 700 and the terminal 800 may be im-plemented in hardware, such as Complementary Metal Oxide Semiconductor (CMOS)-based logic circuits, firmware, software, or a combination thereof. For example, they may be practiced using electrical circuits, such as transistors, logic gates, and Application Specific Integrated Circuits (ASICs).

Any such software may be stored in a computer readable storage medium. The computer readable storage medium stores one or more programs (software modules), the one or more programs comprising instructions, which when executed by one or more processors in an electronic device, cause the electronic device to perform a method of the present invention.

Any such software may be stored in the form of volatile or non-volatile storage such as, for example, a storage device like a Read Only Memory (ROM), whether erasable or rewritable or not, or in the form of memory such as, for example. Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are exemplary embodiments of machine-readable storage that are suitable for storing a program or programs comprising instructions that, when executed, implement exemplary embodiments of the present invention. Accordingly, exemplary embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and exemplary embodiments
suitably encompass the same.

According to exemplary embodiments of the present invention, smooth communication is achieved by efficiently performing beamforming and thus increasing data rate and reducing power consumption and interference.

Several exemplary embodiments have thus been described, but it will be understood that various modifications can be made without departing the scope of the present invention.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A method of performing beamforming in a base station, the method comprising:
receiving random access signals transmitted through a plurality of transmit beams of a terminal, the random access signals being received through a plurality of receive beams of the base station;
identifying a best transmit beam from among the transmit beams based on receiving of the random access signals for signal transmission in the terminal;
identifying a best receive beam from among the receive beams based on receiving of the random access signals for signal reception in the base station;
transmitting information indicating the best transmit beam and information indicating the best receive beam to the terminal; and
receiving an uplink signal transmitted through the best receive beam on a sub-channel corresponding to the best receive beam, wherein the sub-channel is selected from a plurality of sub-channels corresponding to the plurality of receive beams of the base station on a time-frequency domain.

2. The method of claim 1, further comprising:
transmitting, to the terminal, a receive beam configuration message including information about the plurality of receive beams assigned respectively to the plurality of sub-channels that form random access channels.

3. The method of claim 1, wherein the uplink signal comprises at least one of a bandwidth request signal, a reference channel-request signal, and a handover request signal.

4. A method of performing beamforming in a terminal, the method comprising:
transmitting, to a base station, random access signals through a plurality of transmit beams of the terminal; and
receiving, from the base station, information indicating a best transmit beam from among the plurality of transmit beams and information indicating a best receive beam selected from among a plurality of receive beams of the base station; and
transmitting, to the base station, an uplink signal through the best receive beam on a sub-channel corresponding to the best receive beam,
wherein the best transmit beam is selected by the base station based on receiving of the random access signals, and the best receive is selected by the base station based on receiving of the random access signals, and
wherein the sub-channel is selected from a plurality of sub-channels corresponding to the plurality of receive beams of the base station on a time-frequency domain.

5. The method of claim 4, further comprising:
receiving, from the base station, a receive beam configuration message including information about the plurality of receive beams assigned respectively to the plurality of sub-channels that form random access channels.

6. The method of claim 4, wherein the uplink signal comprises at least one of a bandwidth request signal, a reference channel-request signal, and a handover request signal.

7. A base station for performing beamforming, the base station comprising:
a transceiver configured to receive random access signals transmitted through a plurality of transmit beams of a terminal, the random access signals being received through a plurality of receive beams of the base station; and
a controller configured to:
identify a best transmit beam from among the transmit beams based on receiving of the random access signals for signal transmission in the terminal, and
identify a best receive beam from among the receive beams based on receiving of the random access signals for signal reception in the base station and
wherein the transceiver is further configured to:
transmit information indicating the best transmit beam and information indicating the best receive beam to the terminal, and
receive an uplink signal transmitted through the best receive beam on a sub-channel corresponding to the best receive beam, wherein the sub-channel is selected from a plurality of sub-channels corresponding to the plurality of receive beams of the base station on a time-frequency domain.

8. The base station of claim 7, wherein the transmitter is further configured to transmit, to the terminal, a receive beam configuration message including information about the plurality of receive beams assigned respectively to the plurality of sub-channels that form random access channels.

9. The base station of claim 7, wherein the uplink signal comprises at least one of a bandwidth request signal, a reference channel-request signal, and a handover request signal.

10. A terminal for performing beamforming, the terminal comprising:
a transceiver configured to transmit, to the base station, random access signals through a plurality of transmit beams of the terminal,
receive, from the base station, information indicating a best transmit beam from among the plurality of transmit beams and information indicating a best receive beam selected from among a plurality of receive beams of the base station, and
transmit, to the base station, an uplink signal through the best receive beam on a sub-channel corresponding to the best receive beam,
wherein the best transmit beam is selected by the base station based on receiving of the random access signals, and the best receive beam is selected by the base station based on receiving of the random access signals, and
wherein the sub-channel is selected from a plurality of sub-channels corresponding to the plurality of receive beams of the base station on a time-frequency domain.

11. The terminal of claim 10, wherein the receiver is further configured to receive, from the base station, a receive beam configuration message including information about the plurality of receive beams assigned respectively to the plurality of sub-channels that form random access channels.

12. The terminal of claim 10, wherein the uplink signal comprises at least one of a bandwidth request signal, a reference channel-request signal, and a handover request signal.

## Patentansprüche

1. Verfahren des Durchführens von Strahlformung in einer Basisstation, wobei das Verfahren Folgendes umfasst:
Empfangen von Direktzugriffssignalen, die über mehrere Sendestrahlen eines Endgerätes gesendet werden, wobei die Direktzugriffssignale über mehrere Empfangsstrahlen der Basisstation empfangen werden;
Identifizieren eines besten Sendestrahles unter den Sendestrahlen basierend auf Empfangen der Direktzugriffssignale für Signalsendung im Endgerät;
Identifizieren eines besten Empfangsstrahles unter den Empfangsstrahlen basierend auf Empfangen der Direktzugriffssignale für Signalempfang in der Basisstation;
Senden von Informationen, die den besten Sendestrahl angeben, und Informationen, die den besten Empfangsstrahl angeben, zum Endgerät und
Empfangen eines Uplinksignales, das über den besten Empfangsstrahl auf einem Unterkanal gesendet wird, der dem besten Empfangsstrahl entspricht; wobei der Unterkanal aus mehreren Unterkanälen ausgewählt wird, die den mehreren Empfangsstrahlen der Basisstation auf einem Zeit-Frequenz-Bereich entsprechen.

2. Verfahren nach Anspruch 1, das ferner Folgendes umfasst:
Senden einer Empfangsstrahl-Konfigurationsmitteilung zum Endgerät, die Informationen über die mehreren Empfangsstrahlen beinhaltet, die jeweils den mehreren Unterkanälen zugeordnet sind, die Direktzugriffskanäle bilden.

3. Verfahren nach Anspruch 1, wobei das Uplinksignal mindestens eines von einem Bandbreitenanforderungssignal, einem Referenzkanalanforderungssignal und einem Handoveranforderungssignal umfasst.

4. Verfahren des Durchführens von Strahlformung in einem Endgerät, wobei das Verfahren Folgendes umfasst:
Senden von Direktzugriffssignalen über mehrere Sendestrahlen des Endgerätes zu einer Basisstation und
Empfangen von Informationen, die einen besten Sendestrahl unter den mehreren Sendestrahlen angeben, und von Informationen, die einen besten Empfangsstrahl angeben, der unter mehreren Empfangsstrahlen der Basisstation ausgewählt wird, von der Basisstation und
Senden eines Uplinksignales zur Basisstation über den besten Empfangstrahl auf einem Unterkanal, der dem besten Empfangsstrahl entspricht;
wobei der beste Sendestrahl durch die Basisstation basierend auf Empfangen des Direktzugriffssignales ausgewählt wird und der eine Empfangsstrahl durch die Basisstation basierend auf Empfangen des Direktzugriffssignales ausgewählt wird und wobei der Unterkanal aus mehreren Unterkanälen ausgewählt wird, die den mehreren Empfangsstrahlen der Basisstation auf einem Zeit-Frequenz-Bereich entsprechen.

5. Verfahren nach Anspruch 4, der ferner Folgendes umfasst:
Empfangen von der Basisstation einer Empfangsstrahl-Konfigurationsmitteilung von der Basisstation, die Informationen über die mehreren Empfangsstrahlen beinhaltet, die jeweils den mehreren Unterkanälen zugeordnet sind, die Direktzugriffskanäle bilden.

6. Verfahren nach Anspruch 4, wobei das Uplinksignal mindestens eines von einem Bandbreitenanforderungssignal, einem Referenzkanalanforderungssignal und einem Handoveranforderungssignal umfasst.

7. Basisstation zum Durchführen von Strahlformung, wobei die Basisstation Folgendes umfasst:
einen Sendeempfänger, der konfiguriert ist, Direktzugriffssignale zu empfangen, die über mehrere Sendestrahlen eines Endgerätes gesendet werden, wobei die Direktzugriffssignale über mehrere Empfangsstrahlen der Basisstation empfangen werden; und
eine Steuerung, die konfiguriert ist,
einen besten Sendestrahl unter den Sendestrahlen basierend auf Empfangen der Direktzugriffssignale für Signalsendung im Endgerät zu identifizieren und
einen besten Empfangsstrahl unter den Empfangsstrahlen basierend auf Empfangen der Direktzugriffssignale für Signalempfang in der Basisstation zu identifizieren und
wobei der Sendeempfänger ferner konfiguriert ist,
Informationen, die den besten Sendestrahl angeben, und Informationen, die den besten Empfangsstrahl angeben, zum Endgerät zu senden und
ein Uplinksignal zu empfangen, das über den besten Empfangsstrahl auf einem Unterkanal gesendet wird, der dem besten Empfangsstrahl entspricht, wobei der Unterkanal aus mehreren Unterkanälen ausgewählt wird, die den mehreren Empfangsstrahlen der Basisstation auf einem Zeit-Frequenz-Bereich entsprechen.

8. Basisstation nach Anspruch 7, wobei der Sender ferner konfiguriert ist, eine Empfangsstrahl-Konfigurationsmitteilung zum Endgerät zu senden, die Informationen über die mehreren Empfangsstrahlen beinhaltet, die jeweils den mehreren Unterkanälen zugeordnet sind, die Direktzugriffskanäle bilden.

9. Basisstation nach Anspruch 7, wobei das Uplinksignal mindestens eines von einem Bandbreitenanforderungssignal, einem Referenzkanalanforderungssignal und einem Handoveranforderungssignal umfasst.

10. Endgerät zum Durchführen von Strahlformung, wobei das Endgerät Folgendes umfasst:
einen Sendeempfänger, der konfiguriert ist, Direktzugriffssignale über mehrere Sendestrahlen des Endgerätes zur Basisstation zu senden,
Informationen, die einen besten Sendestrahl unter den mehreren Sendestrahlen angeben, und Informationen, die einen besten Empfangsstrahl angeben, der unter mehreren Empfangsstrahlen der Basisstation ausgewählt wird, von der Basisstation zu empfangen und
ein Uplinksignal über den besten Empfangsstrahl auf einem Unterkanal, der dem besten Empfangsstrahl entspricht, zur Basisstation zu senden;
wobei der beste Sendestrahl durch die Basisstation basierend auf Empfangen des Direktzugriffssignales ausgewählt wird und ein bester Empfangsstrahl durch die Basisstation basierend auf Empfangen des Direktzugriffssignales ausgewählt wird und
wobei der Unterkanal aus mehreren Unterkanälen ausgewählt wird, die den mehreren Empfangsstrahlen der Basisstation auf einem Zeit-Frequenz-Bereich entsprechen.

11. Endgerät nach Anspruch 10, wobei der Empfänger ferner konfiguriert ist, eine Empfangsstrahl-Konfigurationsmitteilung von der Basisstation zu empfangen, die Informationen über die mehreren Empfangsstrahlen beinhaltet, die jeweils den mehreren Unterkanälen zugeordnet sind, die Direktzugriffskanäle bilden.

12. Endgerät nach Anspruch 10, wobei das Uplinksignal mindestens eines von einem Bandbreitenanforderungssignal, einem Referenzkanalanforderungssignal und einem Handoveranforderungssignal umfasst.

## Revendications

1. Procédé d'exécution de formation de faisceau dans une station de base, le procédé comprenant :
la réception de signaux d'accès aléatoire transmis par l'intermédiaire d'une pluralité de faisceaux de transmission d'un terminal, les signaux d'accès aléatoire étant reçus par l'intermédiaire d'une pluralité de faisceaux de réception de la station de base ;
l'identification du meilleur faisceau de transmission parmi les faisceaux de transmission sur la base de la réception des signaux d'accès aléatoire pour une transmission de signal dans le terminal ;
l'identification du meilleur faisceau de réception parmi les faisceaux de réception sur la base de la réception des signaux d'accès aléatoire pour une réception de signal dans la station de base ;
la transmission d'informations indiquant le meilleur faisceau de transmission et d'informations indiquant le meilleur faisceau de réception au terminal ; et
la réception d'un signal de liaison montante transmis par l'intermédiaire du meilleur faisceau de réception sur un sous-canal correspondant au meilleur faisceau de réception ; dans lequel le sous-canal est sélectionné parmi une pluralité de sous-canaux correspondant à la pluralité de faisceaux de réception de la station de base dans un domaine de temps-fréquence.

2. Procédé selon la revendication 1, comprenant en outre :
la transmission, à destination du terminal, d'un message de configuration de faisceau de réception comprenant des informations relatives à la pluralité de faisceaux de réception assignés respectivement à la pluralité de sous-canaux constituant des canaux d'accès aléatoire.

3. Procédé selon la revendication 1, dans lequel le signal de liaison montante comprend au moins l'un d'un signal de demande de largeur de bande, d'un signal de demande de canal de référence, et d'un signal de demande de transfert intercellulaire.

4. Procédé d'exécution de formation de faisceau dans un terminal, le procédé comprenant :
la transmission, à destination d'une station de base, de signaux d'accès aléatoire par l'intermédiaire d'une pluralité de faisceaux de transmission du terminal ; et
la réception, en provenance de la station de base, d'informations indiquant le meilleur faisceau de transmission parmi la pluralité de faisceaux de transmission et d'informations indiquant le meilleur faisceau de réception sélectionné parmi une pluralité de faisceaux de réception de la station de base ; et
la transmission, à destination de la station de base, d'un signal de liaison montante par l'intermédiaire du meilleur faisceau de réception sur un sous-canal correspondant au meilleur faisceau de réception,
dans lequel le meilleur faisceau de transmission est sélectionné par la station de base sur la base de la réception des signaux d'accès aléatoire, et le meilleur faisceau de réception est sélectionné par la station de base sur la base de la réception des signaux d'accès aléatoire, et dans lequel le sous-canal est sélectionné parmi une pluralité de sous-canaux correspondant à la pluralité de faisceaux de réception de la station de base dans un domaine de temps-fréquence.

5. Procédé selon la revendication 4, comprenant en outre :
la réception, en provenance de la station de base, d'un message de configuration de faisceau de réception comprenant des informations relatives à la pluralité de faisceaux de réception assignés respectivement à la pluralité de sous-canaux constituant des canaux d'accès aléatoire.

6. Procédé selon la revendication 4, dans lequel le signal de liaison montante comprend au moins l'un d'un signal de demande de largeur de bande, d'un signal de demande de canal de référence, et d'un signal de demande de transfert intercellulaire.

7. Station de base pour l'exécution de formation de faisceau, la station de base comprenant :
un émetteur-récepteur configuré pour effectuer la réception de signaux d'accès aléatoire transmis par l'intermédiaire d'une pluralité de faisceaux de transmission d'un terminal, les signaux d'accès aléatoire étant reçus par l'intermédiaire d'une pluralité de faisceaux de réception de la station de base ; et
un organe de commande configuré pour effectuer :
l'identification du meilleur faisceau de transmission parmi les faisceaux de transmission sur la base de la réception des signaux d'accès aléatoire pour une transmission de signal dans le terminal, et
l'identification du meilleur faisceau de réception parmi les faisceaux de réception sur la base de la réception des signaux d'accès aléatoire pour une réception de signal dans la station de base, et
dans laquelle l'émetteur-récepteur est en outre configuré pour effectuer :
la transmission d'informations indiquant le meilleur faisceau de transmission et d'informations indiquant le meilleur faisceau de réception au terminal, et
la réception d'un signal de liaison montante transmis par l'intermédiaire du meilleur faisceau de réception sur un sous-canal correspondant au meilleur faisceau de réception, dans laquelle le sous-canal est sélectionné parmi une pluralité de sous-canaux correspondant à la pluralité de faisceaux de réception de la station de base dans un domaine de temps-fréquence.

8. Station de base selon la revendication 7, dans laquelle l'émetteur est en outre configuré pour effectuer la transmission, à destination du terminal, d'un message de configuration de faisceau de réception comprenant des informations relatives à la pluralité de faisceaux de réception assignés respectivement à la pluralité de sous-canaux constituant des canaux d'accès aléatoire.

9. Station de base selon la revendication 7, dans laquelle le signal de liaison montante comprend au moins l'un d'un signal de demande de largeur de bande, d'un signal de demande de canal de référence, et d'un signal de demande de transfert intercellulaire.

10. Terminal pour l'exécution de formation de faisceau, le terminal comprenant :
un émetteur-récepteur configuré pour effectuer la transmission, à destination de la station de base, de signaux d'accès aléatoire par l'intermédiaire d'une pluralité de faisceaux de transmission du terminal,
la réception, en provenance de la station de base, d'informations indiquant le meilleur faisceau de transmission parmi la pluralité de faisceaux de transmission et d'informations indiquant le meilleur faisceau de réception sélectionné parmi une pluralité de faisceaux de réception de la station de base, et
la transmission, à destination de la station de base, d'un signal de liaison montante par l'intermédiaire du meilleur faisceau de réception sur un sous-canal correspondant au meilleur faisceau de réception,
dans lequel le meilleur faisceau de transmission est sélectionné par la station de base sur la base de la réception des signaux d'accès aléatoire, et le meilleur faisceau de réception est sélectionné par la station de base sur la base de la réception des signaux d'accès aléatoire ; et
dans lequel le sous-canal est sélectionné parmi une pluralité de sous-canaux correspondant à la pluralité de faisceaux de réception de la station de base dans un domaine de temps-fréquence.

11. Terminal selon la revendication 10, dans lequel le récepteur est en outre configuré pour effectuer la réception, en provenance de la station de base, d'un message de configuration de faisceau de réception comprenant des informations relatives à la pluralité de faisceaux de réception assignés respectivement à la pluralité de sous-canaux constituant des canaux d'accès aléatoire.

12. Terminal selon la revendication 10, dans lequel le signal de liaison montante comprend au moins l'un d'un signal de demande de largeur de bande, d'un signal de demande de canal de référence, et d'un signal de demande de transfert intercellulaire.
